(19) Europäisches Patentamt
European Patent Office
Office européen des brevets

(11) **EP 3 850 309 B1**

(12) **FASCICULE DE BREVET EUROPEEN**

(45) Date de publication et mention de la délivrance du brevet:
**10.07.2024 Bulletin 2024/28**

(21) Numéro de dépôt: **19787333.4**

(22) Date de dépôt: **11.09.2019**

(51) Classification Internationale des Brevets (IPC):
*G01D 5/20* *(2006.01)*

(52) Classification Coopérative des Brevets (CPC):
**G01D 5/2053**

(86) Numéro de dépôt international:
**PCT/FR2019/052102**

(87) Numéro de publication internationale:
**WO 2020/053525 (19.03.2020 Gazette 2020/12)**

(54) **CAPTEUR INDUCTIF DE POSITION AVEC COMPENSATION D'OFFSET**

INDUKTIVER POSITIONSSENSOR MIT OFFSET-KOMPENSATION

INDUCTIVE POSITION SENSOR WITH OFFSET COMPENSATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2018 FR 1858180**

(43) Date de publication de la demande:
**21.07.2021 Bulletin 2021/29**

(73) Titulaire: **Electricfil Automotive**
**01700 Beynost (FR)**

(72) Inventeurs:
• **FERREIRA DA CUNHA, Jean-Philippe**
**01120 MONTLUEL (FR)**
• **MÖLLER, Rainer**
**69970 CHAPONNAY (FR)**

(74) Mandataire: **Cabinet Beau de Loménie**
**51 avenue Jean Jaurès**
**BP 7073**
**69301 Lyon Cedex 07 (FR)**

(56) Documents cités:
EP-A1- 1 158 276    GB-A- 2 167 563
US-A- 5 886 519    US-A1- 2014 225 600

**Description**

La présente invention concerne le domaine technique des capteurs inductifs de position par couplage par courants de Foucault.

La présente invention trouve des applications pour déterminer la position linéaire ou angulaire de pièces mobiles par exemple dans des véhicules, des moteurs ou des machines-outils.

L'état de la technique a proposé diverses solutions de capteurs inductifs par couplage par courants de Foucault pour mesurer la position d'un mobile le long d'une trajectoire linéaire ou angulaire.

Pour déterminer la position linéaire d'un mobile, le brevet US 6 483 295 décrit un capteur de position comportant une cible montée mobile en déplacement par rapport à une carte ou une plaque de circuit imprimé qui est fixe. La carte de circuit comporte un bobinage primaire relié à un générateur de courant alternatif permettant de générer un champ magnétique lors de la circulation du courant dans ledit bobinage primaire. Ce bobinage primaire entoure des bobinages secondaires. Le champ magnétique ainsi crée est perçu par les bobinages secondaires et induit un courant dans lesdits bobinages secondaires.

La cible est réalisée dans un matériau conducteur pour permettre la circulation de courants de Foucault. Cette cible est déplacée linéairement par rapport aux bobinages primaire et secondaires. Le couplage inductif entre le bobinage primaire et les bobinages secondaires est modulé par la position de la cible. Les géométries des bobinages secondaires sont choisies de manière que les signaux induits délivrés par les bobinages secondaires dépendent de la position de la cible. Un détecteur connecté aux bobinages secondaires permet, à partir des signaux induits issus des bobinages secondaires, de déterminer la position de la cible.

Il apparaît cependant qu'au moins l'un des bobinages secondaires ne présente pas une forme symétrique par rapport aux extrémités du bobinage primaire. Cette dissymétrie de configuration d'un bobinage secondaire entraîne l'apparition d'un signal de mesure de décalage ou offset de mesure. Pour remédier à cet inconvénient, le brevet US 6 483 295 propose de réduire la taille d'un bobinage secondaire au niveau des extrémités du bobinage primaire. Cette solution présente l'inconvénient de réduire la portion linéaire de mesure pour un encombrement constant du capteur.

Dans le domaine des capteurs de mesure de position angulaire, le brevet FR 3 023 611 propose, afin de remédier au problème de la concentration des lignes de champ au niveau des extrémités du bobinage primaire, de réaliser notamment les bobinages secondaires par des pistes délimitant des mailles complètes. Cette solution présente l'inconvénient d'augmenter la taille du circuit dont le bobinage primaire vient entourer les deux bobinages secondaires.

De même, le document GB 2 167 563 décrit un capteur de position ou de vitesse par couplage pour courants de Foucault. Selon des modes de réalisation, ce document propose de réaliser la cible en plusieurs parties afin d'obtenir un signal linéaire ou de mettre en oeuvre plusieurs bobinages secondaires pour obtenir un signal univoque sur toute la course. De telles solutions ne permettent pas de compenser l'offset de mesure.

Le brevet US 5 886 519 décrit également un capteur de position proposant notamment pour compenser les tolérances de fabrication ou d'autres contraintes tendant à créer un décalage de signal, de modifier la taille et la forme des bobinages secondaires ou la distance entre le bobinage primaire et les bobinages secondaires qui est d'au moins une période. Cette solution entraîne une augmentation de la taille du capteur.

La présente invention vise donc à remédier aux inconvénients de l'art antérieur en proposant un nouveau capteur inductif pour déterminer la position linéaire ou angulaire d'un mobile, permettant de réduire l'offset de mesure tout en conservant la plage de mesure sur toute la plage de réalisation des bobinages secondaires.

Pour atteindre un tel objectif, le capteur inductif de position pour déterminer la position d'un mobile le long d'une trajectoire linéaire ou rotative selon l'invention est conforme à la revendication 1.

De plus, le capteur selon l'invention peut comporter en outre en combinaison au moins l'une et/ou l'autre des caractéristiques additionnelles suivantes :

- la longueur du bobinage primaire est plus grande que la longueur des bobinages secondaires de sorte que chaque segment d'extrémité du bobinage primaire est situé par rapport aux extrémités voisines des bobinages secondaires, à une distance inférieure à 10 millimètres ou à ¼ de la période des bobinages secondaires ;
- le système d'équilibrage du couplage comporte pour au moins un bobinage secondaire, au moins un décalage entre la ligne moyenne ou le rayon moyen de la piste aller et la ligne moyenne ou le rayon moyen de la piste retour dudit bobinage secondaire, selon une direction perpendiculaire à la trajectoire et selon un sens assurant une décroissance de la forme du bobinage secondaire situé au niveau des segments d'extrémité du bobinage primaire ;

- le décalage entre la ligne moyenne ou rayon moyen de la piste aller et la ligne moyenne ou rayon moyen de la piste retour dudit bobinage secondaire est symétrique par rapport à la ligne moyenne ou rayon des pistes de l'autre bobinage ;
- le système de d'équilibrage du couplage est réalisé par une modulation de la forme des bobinages secondaires pour assurer une décroissance de la forme des bobinages au niveau des segments d'extrémité du bobinage primaire ;

- pour une cible à trajectoire rotative, les formes de la piste aller et de la piste retour du bobinage secondaire sinus sont décrites par la formulation suivante :

  -

$$Yaller(\theta) = Ymoy\_aller + E(\theta) * (A1*sin(a*\theta+\varphi1) + (A2*sin(2*a*\theta+\varphi2) + (A3*sin(3*a*\theta+\varphi3) ... + An*sin(n*a*\theta+\varphi n)) ;$$

  -

$$Yretour(\theta) = Ymoy\_retour + E(\theta) * (-A1*sin(a*\theta+\varphi1) - (A2*sin(2*a*\theta+\varphi2) - (A3*sin(3*a*\theta+\varphi3) ... - An*sin(n*a*\theta+\varphi n)) ;$$

et pour le bobinage secondaire cosinus **(9)** :

  -

$$Yaller(\theta) = Ymoy\_aller + E(\theta) * (A1*cos(a*\theta+\varphi1) + (A2*cos(2*a*\theta+\varphi2) + (A3*cos(3*a*\theta+\varphi3) ... + An*cos(n*a*\theta+\varphi n)) ;$$

  -

$$Yretour(\theta) = Ymoy\_retour + E(\theta) * (-A1*cos(a*\theta+\varphi1) - (A2*cos(2*a*\theta+\varphi2) - (A3*cos(3*a*\theta+\varphi3) ... - An*cos(n*a*\theta+\varphi n)) ;$$

avec $E(\theta)$ une fonction enveloppe ;
- pour une cible à déplacement linéaire, les formes de la piste aller et de la piste retour du bobinage secondaire sinus sont décrites par la formulation suivante :

  -

$$yaller(x) = Ymoy\_aller + E(x) * (A1*sin(a*x+\varphi1) + (A2*sin(2*a*x+\varphi2) + (A3*sin(3*a*x+\varphi3) ... + An*sin(n*a*x+\varphi n)) ;$$

  -

$$yretour(x) = Ymoy\_retour + E(x) * (-A1*sin(a*x+\varphi1) - (A2*sin(2*a*x+\varphi2) - (A3*sin(3*a*x+\varphi3) ... - An*sin(n*a*x+\varphi n)) ;$$

et pour le bobinage secondaire cosinus :

  -

$$yaller(x) = Ymoy\_aller + E(x) * (A1*cos(a*x+\varphi1) + (A2*cos(2*a*x+\varphi2) + (A3*cos(3*a*x+\varphi3) ... + An*cos(n*a*x+\varphi n)) ;$$

  -

$$yretour(x) = Ymoy\_retour + E(x) * (-A1*cos(a*x+\varphi1) - (A2*cos(2*a*x+\varphi2) - (A3*cos(3*a*x+\varphi3) ... -$$

An*cos(n*a*x+φn)) ;

avec E(x) une fonction enveloppe ;
- la fonction enveloppe présente une valeur maximum au niveau du centre du bobinage primaire.

Diverses autres caractéristiques ressortent de la description faite ci-dessous en référence aux dessins annexés qui montrent, à titre d'exemples non limitatifs, des formes de réalisation de l'objet de l'invention.

La **Figure 1** est une vue schématique d'un premier mode de réalisation d'un capteur de position conforme à l'invention.
La **Figure 3** est une vue d'une fonction enveloppe du type trapèze mis en oeuvre pour la définition de la forme des bobinages secondaires pour un troisième mode de réalisation du capteur conforme à l'invention.
La **Figure 4** est une vue schématique d'un troisième mode de réalisation d'un capteur de position conforme à l'invention.
La **Figure 5** est une vue schématique d'un capteur de position angulaire conforme à l'invention mettant en oeuvre le troisième mode de réalisation.

Tel que cela ressort plus précisément des **Figures**, l'objet de l'invention concerne un capteur de position **1** pour un mobile au sens général non représenté et dont la position est à déterminer le long d'une trajectoire linéaire ou angulaire **F**.

Le capteur de position **1** comporte une partie de stator **2** et une cible **3** montée mobile selon une trajectoire **F**. Ainsi, la cible **3** est entraînée par le mobile ou se trouve aménagée sur le mobile dont la position est à déterminer. La cible **3** est réalisée dans un matériau conducteur tel que métallique, pour permettre la circulation de courants de Foucault.

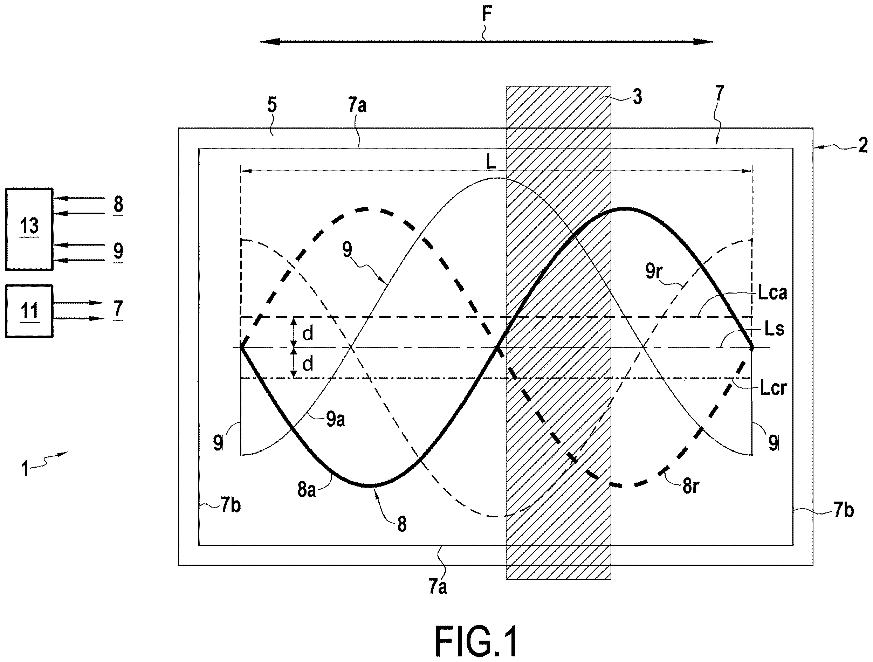

En référence à la **Fig. 1,** la partie de stator **2** du capteur de position **1** est réalisée sur une longueur limitée correspondant à la course du mobile c'est-à-dire de la cible **3**. La partie de stator **2** comporte une carte ou une plaque de circuit **5** qui est montée fixe par rapport à la cible **3**. De manière connue, la plaque de circuit **5** comporte un bobinage primaire **7** entourant uniquement deux bobinages secondaires **8, 9** couplés magnétiquement au bobinage primaire **7**. Le bobinage primaire **7** présente ainsi deux segments principaux **7a** s'étendant parallèlement entre eux et à la trajectoire **F** et deux segments d'extrémité **7b** s'étendant parallèlement entre eux mais perpendiculairement par rapport à la trajectoire **F**.

Typiquement, un générateur de courant alternatif **11** est connecté au bobinage primaire **7** permettant de générer un champ magnétique lors de la circulation d'un courant dans ledit bobinage primaire. Le champ magnétique ainsi crée est perçu par les bobinages secondaires **8, 9** et induit une tension dans les dits bobinages secondaires. Par exemple, le générateur de courant **11** délivre un courant alternatif haute fréquence, permettant l'établissement des courants de Foucault dans la cible **3**.

Le couplage inductif entre le bobinage primaire **7** et les bobinages secondaires **8, 9** est modulé par la position de la cible **3**. La cible **3** modifie le couplage magnétique entre le bobinage primaire **7** et les deux bobinages secondaires **8, 9**. Ces bobinages secondaires **8, 9** sont reliés à un détecteur **13** qui en mesurant les tensions électriques induites aux bornes des bobinages secondaires **8, 9** permet de déduire la position précise de la cible **3**. Par voie de conséquence, le détecteur **13** permet de déterminer la position du mobile.

Selon cette configuration, le bobinage primaire **7** est désigné bobinage émetteur tandis que les bobinages secondaires **8, 9** sont désignés bobinages récepteurs. Il est à noter qu'il peut être envisagé un fonctionnement inverse pour lequel le générateur de courant **11** est relié aux bobinages secondaires **8, 9** qui sont émetteurs tandis que le bobinage primaire **7** est récepteur et auquel est connecté le détecteur **13** qui à partir de la phase du signal induit permet de déduire la position précise de la cible **3**.

Pour un souci de clarté des dessins, les entrées et les sorties des bobinages **7, 8, 9** ne sont pas représentées. De même, chaque bobinage est représenté par une piste aller et par une piste retour formant une boucle ou un enroulement. Bien entendu, chaque bobinage **7, 8, 9** peut comporter plusieurs pistes aller et plusieurs pistes retour. La piste aller et la piste retour de chaque bobinage possèdent des formes adaptées permettant de délimiter entre elles des mailles.

Il est à noter que la longueur des bobinages secondaires **8, 9** prise selon la trajectoire **F** définit la fenêtre de mesure du capteur de position **1**. Conformément à une caractéristique de l'invention, les deux bobinages secondaires **8, 9** sont aménagés de manière que leurs deux extrémités se trouvent situées sur deux lignes perpendiculaires à la trajectoire **F** et séparées d'une distance **L**. Ainsi, les deux bobinages secondaires **8, 9** présentent une longueur sensiblement identique **L**, prise selon une direction parallèle à la trajectoire **F** et correspondant à la fenêtre de mesure du capteur de position **1**.

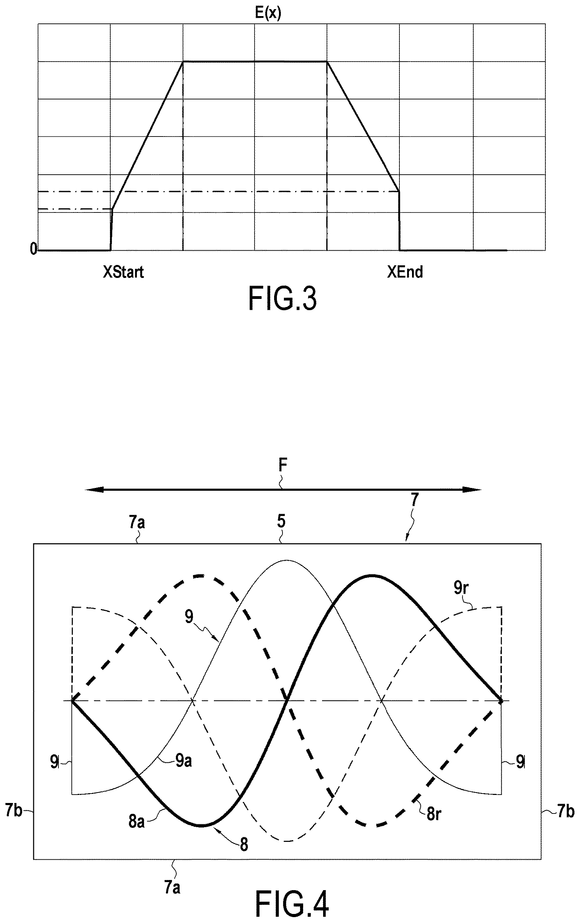

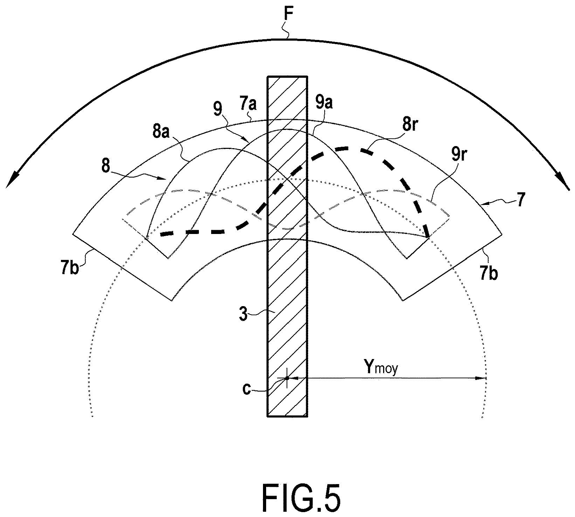

Dans les exemples illustrés sur les **Fig. 1** et **3,** la trajectoire représentée par la flèche F est linéaire de sorte que la configuration des bobinages est réalisée selon une direction linéaire. Bien entendu, la configuration des bobinages illustrés aux **Fig. 1** et **3** peut s'entendre pour une trajectoire angulaire. Ainsi, la configuration des bobinages est réalisée selon une direction angulaire comme l'illustre par exemple la **Fig. 5**. Les **Fig. 4** et **5** montrent ainsi une même configuration des bobinages pour respectivement une trajectoire linéaire et une trajectoire angulaire.

De manière connue, en présence de la cible **3** dans la fenêtre de mesure, les bobinages secondaires **8, 9** placés à proximité de ladite cible **3** voient une quantité de flux du champ magnétique plus faible que si la cible **3** était absente. Chaque bobinage secondaire **8, 9** est constitué de manière générale, de mailles d'orientations opposées de sorte que lorsque la cible **3** se déplace au-dessus de l'une puis de l'autre de ces mailles, le bobinage secondaire voit, par rapport à une valeur moyenne nulle, une augmentation relative puis une diminution relative de la quantité de flux du champ magnétique qui le traverse. Généralement, on distingue, d'une part, un bobinage secondaire possédant une forme d'une fonction sinus dit « sinus » **8** adapté pour délivrer un signal sinus lors d'un passage d'une cible **3** dans la fenêtre de mesure et un bobinage secondaire possédant une forme d'une fonction cosinus dit « cosinus » **9** adapté pour délivrer un signal cosinus lors du passage d'une cible **3** dans la fenêtre de mesure. Les signaux sinus/cosinus qui sont transmis au détecteur **13** permet de déterminer la position angulaire ou linéaire précise de la cible par le calcul de l'arc tangente.

Comme rappelé dans le préambule de la présente demande, les signaux sinusoïdaux sont obtenus avec des bobinages secondaires de forme sinusoïdale uniquement si le champ magnétique crée par le bobinage primaire est constant dans le temps et homogène sur toute l'aire des bobinages secondaires, ce qui n'est pas le cas du champ magnétique crée par le bobinage primaire **7** dont la plage de mesure est limitée.

Conformément à l'invention, le capteur inductif de position comporte un système d'équilibrage du couplage entre le bobinage primaire **7** et les bobinages secondaires **8, 9,** adapté pour compenser l'offset de mesure. Ce système d'équilibrage est adapté pour compenser l'offset de mesure induit par la proximité entre les bobinages secondaires **8, 9** et les segments d'extrémité **7b** du bobinage primaire **7**. A cet égard, la longueur du bobinage primaire **7** est légèrement plus grande que la longueur **L** des bobinages secondaires **8, 9**. Typiquement, chaque segment d'extrémité **7b** du bobinage primaire est situé par rapport aux extrémités voisines des bobinages secondaires **8, 9,** à une distance inférieure à 10 millimètres ou à ¼ de la période des bobinages secondaires **8, 9**.

La description qui suit décrit trois modes de réalisation d'un tel système d'équilibrage visant à réduire cet offset de mesure.

La **Fig. 1** illustre un premier mode de réalisation pour lequel le système d'équilibrage du couplage comporte pour au moins un bobinage secondaire **8, 9,** au moins un décalage entre la ligne moyenne de la piste aller et la ligne moyenne de la piste retour, selon une direction perpendiculaire à la trajectoire **F** et selon un sens assurant une décroissance de la forme du bobinage secondaire situé au niveau des segments d'extrémités **7b** du bobinage primaire **7**.

Dans l'exemple illustré, un bobinage secondaire **8** possède la forme d'une fonction sinus et est constitué d'une piste aller **8a** et d'une piste retour **8r** délimitant entre elles une première maille et une deuxième maille. Le bobinage secondaire **9** a la forme d'une fonction cosinus et est constitué d'une piste aller **9a** et d'une piste retour **9r** délimitant entre elles une première demi-maille, une maille centrale et une deuxième demi-maille. Il est à noter que selon ce mode de réalisation, les bobinages secondaires **8, 9** ont les formes exactes respectivement des fonctions sinus et cosinus.

Les extrémités de la piste aller **8a** et de la piste retour **8r** du bobinage secondaire sinus **8** situées à proximité de chaque segment d'extrémité **7b** du bobinage primaire sont positionnées au même endroit de sorte que la piste aller **8a** et la piste retour **8r** du bobinage secondaire sinus **8** présente une ligne moyenne **Ls** commune. Cette ligne moyenne **Ls** est parallèle à la trajectoire **F**.

La piste aller **9a** et la piste retour **9r** du bobinage secondaire cosinus **9** sont décalées selon une direction perpendiculaire à la trajectoire **F** et selon un sens assurant une décroissance de la forme du bobinage secondaire situé au niveau des segments d'extrémités **7b** du bobinage primaire **7**. Il doit être considéré que les pistes aller **9a** et retour **9r** du bobinage secondaire cosinus **9** sont décalées en considération d'une configuration classique d'une fonction cosinus centrée sur la forme d'une fonction sinus. Ainsi, la piste aller **9a** et la piste retour **9r** du bobinage secondaire cosinus **9** sont reliées, au niveau de leurs extrémités, par une piste de liaison **9l** s'étendant perpendiculairement à la trajectoire **F**.

La piste aller **9a** du bobinage secondaire cosinus **9** est décalée de manière que sa ligne moyenne **Lca** se trouve décalée d'une valeur +d par rapport à la ligne moyenne **Ls** du bobinage secondaire sinus **8**. De même, la piste retour **9r** du bobinage secondaire cosinus **9** est décalée de manière que sa ligne moyenne **Lcr** se trouve décalée d'une valeur -d par rapport à la ligne moyenne **Ls** du bobinage secondaire sinus **8**. Ainsi, le décalage entre la ligne moyenne **Lca** de la piste aller **9a** et la ligne moyenne de la piste retour **9r** du bobinage secondaire cosinus est symétrique par rapport à la ligne moyenne des pistes du bobinage secondaire sinus. Il est à noter que lorsque la trajectoire **F** est angulaire, les lignes moyennes correspondent aux rayons moyens.

De plus, la piste aller **9a** et la piste retour **9r** du bobinage secondaire cosinus **9** sont décalées selon un sens assurant une décroissance de la forme du bobinage secondaire cosinus situé au niveau des segments d'extrémités **7b** du bobinage primaire **7**. Ainsi, il ressort clairement de la **Fig. 1** que les demi-mailles du bobinage secondaire cosinus **9** présentent une amplitude inférieure par rapport à l'amplitude de la maille centrale du bobinage secondaire cosinus **9.**

Une telle modification de la forme du bobinage secondaire cosinus **9** en relation des segments d'extrémité **7b** permet d'équilibrer le couplage entre le bobinage primaire **7** et le bobinage secondaires cosinus **9**. Comme rappelé dans le préambule de la présente demande, les signaux sinusoïdaux sont obtenus avec des bobinages secondaires de forme sinusoïdale uniquement si le champ magnétique crée par le bobinage primaire est constant dans le temps et homogène sur toute l'aire des bobinages secondaires, ce qui n'est pas le cas du champ magnétique crée par le bobinage primaire **7,** notamment aux extrémités. La réduction de l'amplitude des deux demi-mailles aux extrémités du bobinage cosinus **9** au profit de la maille centrale permet d'équilibrer la contribution de chacune des mailles et donc de diminuer l'offset de mesure.

Selon un troisième mode de réalisation, le système de d'équilibrage du couplage est réalisé par une modulation de la forme des bobinages secondaires **8, 9** pour assurer une décroissance de la forme des bobinages situés au niveau des segments d'extrémité **7b**. Ainsi, les formes des fonctions sinus et cosinus des bobinages secondaires **8, 9** décroissent en direction des segments d'extrémités **7b** du bobinage primaire **7**.

Pour une trajectoire linéaire, les formes de la piste aller **8a** et de la piste retour **8r** du bobinage secondaire sinus **8** sont décrites par la formulation suivante :

- 

$$\text{yaller}(x) = \text{Ymoy\_aller} + E(x) * (A1*\sin(a*x+\varphi1) + (A2*\sin(2*a*x+\varphi2) + (A3*\sin(3*a*x+\varphi3) ... + An*\sin(n*a*x+\varphi n)) ;$$

- 

$$\text{yretour}(x) = \text{Ymoy\_retour} + E(x) * (-A1*\sin(a*x+\varphi1) - (A2*\sin(2*a*x+\varphi2) - (A3*\sin(3*a*x+\varphi3) ... - An*\sin(n*a*x+\varphi n)) ;$$

et les formes de la piste aller **9a** et de la piste retour **9r** du bobinage secondaire cosinus **9** sont décrites par la formulation suivante :

- 

$$\text{yaller}(x) = \text{Ymoy\_aller} + E(x) * (A1*\cos(a*x+\varphi1) + (A2*\cos(2*a*x+\varphi2) + (A3*\cos(3*a*x+\varphi3) ... + An*\cos(n*a*x+\varphi n)) ;$$

- 

$$\text{yretour}(x) = \text{Ymoy\_retour} + E(x) * (-A1*\cos(a*x+\varphi1) - (A2*\cos(2*a*x+\varphi2) - (A3*\cos(3*a*x+\varphi3) ... - An*\cos(n*a*x+\varphi n)) ;$$

avec :

- x, y, les coordonnées cartésiennes dans le repère cartésien considéré selon la trajectoire F du mobile et selon une direction perpendiculaire à la trajectoire et parallèle au plan de déplacement de la cible,
- E(x), une fonction enveloppe ;
- A1, l'amplitude de la composante fondamentale de la piste ;
- A2 à An, les amplitudes des composantes harmoniques de la piste, avec n inférieur à 5 ;
- a, un facteur de proportionnalité permettant d'adapter la période des bobinages secondaires à la course à mesurer ;
- $\phi1$, la phase de la composante fondamentale de la piste ;
- $\phi2$ à $\phi n$, phases des composantes harmoniques de la piste
- $Y_{moy\_aller}$ et $Y_{moy\_retour}$, les coordonnées en Y des lignes moyennes des pistes respectivement aller et retour.

Selon une variante avantageuse de réalisation, les coordonnées **$Y_{moy\_aller}$** et **$Y_{moy\_retour}$** d'un bobinage secondaire sont différentes de sorte que la piste aller du bobinage secondaire est décalée par rapport à la piste retour dudit bobinage secondaire.

La fonction enveloppe **E(x)** est une fonction de modulation des fonctions sinus et cosinus permettant une décroissance de la forme des pistes des bobinages secondaires en direction des segments d'extrémité **7b**.

Typiquement, la fonction enveloppe **E(x)** est le résultat de la somme d'une constante **K** et d'une fonction de modulation sinusoïdale de même période que la composante fondamentale des bobinages secondaires telle que :

- $$E(x) = K + M*\sin(a*x+\phi m) \text{ pour Xstart} \leq X \leq \text{Xend} ;$$

- $$E(X) = 0 \text{ pour } X \leq \text{Xstart} ;$$

- $$E(X) = 0 \text{ pour } X \geq \text{Xend} ;$$

avec Xstart et Xend définissant respectivement le début et la fin du secteur occupé par les bobinages secondaires **8, 9.**

Avantageusement, la phase $\phi_m$ de la fonction de modulation sinusoïdale est choisie de manière que la fonction enveloppe **E(X)** présente un maximum au centre du bobinage primaire **7.**

Une autre configuration avantageuse de la fonction enveloppe **E(x)** est une fonction trapèze telle que représentée à la **Fig. 3.** Dans ce cas la fonction enveloppe peut être décrite telle que, celle-ci est nulle pour X≤ Xstart, puis elle croît linéairement sur un premier secteur, le secteur suivant est constant, avant un dernier secteur qui décroît linéairement jusqu'à Xend, puis de nouveau pour X≥Xend la fonction enveloppe est nulle.

La répartition des différents secteurs de la fonction est choisie de manière avantageuse afin que la fonction enveloppe atténue la contribution des mailles les plus proches des extrémités **7b.**

La **Fig. 4** est un exemple de réalisation des bobinages secondaires **8, 9** dont la forme comporte des harmoniques d'ordre **2.** Le bobinage secondaire **8** de forme sinus est constitué d'une piste aller **8a** et d'une piste retour **8r** formant, une première maille et une deuxième maille dont la forme située à proximité des segments d'extrémités **7b** du bobinage primaire **7** est atténuée pour compenser l'impact de la non homogénéité du champ magnétique sur toute l'aire des bobinages secondaires. Le bobinage secondaire **9** de forme cosinus est constitué d'une piste aller **9a** et d'une piste retour **9r** formant, une première demi-maille, une maille complète et une deuxième demi-maille de sorte que les demi-mailles situées chacune à proximité d'un segment d'extrémité **7b** du bobinage primaire **7** présente une forme atténuée pour compenser l'impact de la non homogénéité du champ magnétique sur toute l'aire des bobinages secondaires. La piste aller **9a** et la piste retour **9r** du bobinage secondaire cosinus **9** sont reliées, au niveau de leurs extrémités, par une piste de liaison **9l** s'étendant perpendiculairement à la trajectoire **F.**

Selon une variante avantageuse de réalisation, la fonction enveloppe **E(x)** présente une valeur maximum au niveau du centre du bobinage primaire **7.**

Bien entendu, ce troisième mode de réalisation du système d'équilibrage peut être mis en oeuvre en combinaison également avec le deuxième mode de réalisation.

La **Fig. 5** illustre l'adaptation du troisième mode de réalisation pour une trajectoire angulaire **F** de la cible **3** tournant autour du centre **C.** Selon cet exemple, les bobinages secondaires **8, 9** sont aménagés selon une forme d'un tronçon de couronne circulaire de largeur angulaire limitée par exemple par l'angle que l'on souhaite mesurer.

La **Fig. 5** illustre à titre d'exemple la forme des bobinages secondaires **8, 9** assurant une décroissance de la forme des bobinages situés au niveau des segments d'extrémité **7b,** et telle que représentée à la **Fig. 4.** Les formes de la piste aller **8a** et de la piste retour **8r** du bobinage secondaire sinus **8** sont décrites par la formulation suivante :

- $$\text{Yaller}(\theta) = \text{Ymoy\_aller} + E(\theta) * (A1*\sin(a*\theta+\varphi1) + (A2*\sin(2*a*\theta+\varphi2) + (A3*\sin(3*a*\theta+\varphi3) ... + An*\sin(n*a*\theta+\varphi n)) ;$$

- $$\text{Yretour}(\theta) = \text{Ymoy\_retour} + E(\theta) * (-A1*\sin(a*\theta+\varphi1) - (A2*\sin(2*a*\theta+\varphi2) - (A3*\sin(3*a*\theta+\varphi3) ... - An*\sin(n*a*\theta+\varphi n)).$$

Les formes de la piste aller **9a** et de la piste retour **9r** du bobinage secondaire cosinus **9** sont décrites par la formulation suivante :

$$Yaller(\theta) = Ymoy\_aller + E(\theta) * (A1*cos(a*\theta+\varphi1) + (A2*cos(2*a*\theta+\varphi2) + (A3*cos(3*a*\theta+\varphi3) ... + An*cos(n*a*\theta+\varphi n)) ;$$

- 

$$Yretour(\theta) = Ymoy\_retour + E(\theta) * (-A1*cos(a*\theta+\varphi1) - (A2*cos(2*a*\theta+\varphi2) - (A3*cos(3*a*\theta+\varphi3) ... - An*cos(n*a*\theta+\varphi n)) ;$$

avec :

- $\theta$, la coordonnée angulaire dans le système de coordonnées polaires dont le centre correspond à l'axe de rotation **C** de la cible **3** ;
- a, un facteur de proportionnalité permettant d'adapter la période des bobinages secondaires à la course à mesurer ;
- $Y_{moy\_aller}$ et $Y_{moy\_retour}$, les rayons moyens des pistes respectivement aller et retour ;
- $E(\theta)$, la fonction enveloppe.

Selon une variante avantageuse de réalisation, la fonction enveloppe ($E(\theta)$) présente une valeur maximum au centre de bobinage primaire **7**.

L'invention n'est pas limitée aux exemples décrits et représentés car diverses modifications peuvent y être apportées sans sortir de son cadre défini par les revendications.

## Revendications

1. - Capteur inductif de position pour déterminer la position d'un mobile le long d'une trajectoire linéaire ou rotative **(F),** comportant :

   - une cible **(3)** mobile selon la trajectoire adaptée pour modifier un champ électromagnétique ;
   - une plaque de circuit fixe **(5)** s'étendant en relation de la cible selon une portion limitée par rapport à la trajectoire et comportant un bobinage primaire **(7)** entourant deux bobinages secondaires **(8, 9)** présentant des longueurs **(L)** sensiblement identiques et possédant des formes de fonctions sinus et cosinus, chaque bobinage secondaire **(8, 9)** comportant au moins une piste aller **(8a, 9a)** et au moins une piste retour **(8r, 9r)** ;
   - un générateur de courant **(11)** pour le bobinage primaire ou les bobinages secondaires pour créer entre le bobinage primaire **(7)** et les bobinages secondaires **(8, 9)** un couplage inductif modulé par la position de la cible ;
   - un détecteur **(13)** de la position linéaire ou angulaire de la cible à partir des signaux induits issus des bobinages secondaires ou du bobinage primaire ;
   - et un système d'équilibrage du couplage entre le bobinage primaire **(7)** et les bobinages secondaires **(8, 9)** pour lequel l'amplitude des bobinages secondaires situés au niveau des segments d'extrémité (7b) du bobinage primaire **(7)** est décroissante par rapport à l'amplitude des bobinages secondaires s'étendant entre lesdits bobinages secondaires situés au niveau des segments d'extrémité pour compenser l'offset de mesure induit par la proximité entre les bobinages secondaires **(8, 9)** et les segments d'extrémité **(7b)** du bobinage primaire **(7).**

2. - Capteur selon la revendication 1, **caractérisé en ce que** la longueur du bobinage primaire **(7)** est plus grande que la longueur **(L)** des bobinages secondaires **(8, 9)** de sorte que chaque segment d'extrémité **(7b)** du bobinage primaire est situé par rapport aux extrémités voisines des bobinages secondaires **(8, 9),** à une distance inférieure à 10 millimètres ou à ¼ de la période des bobinages secondaires **(8, 9).**

3. - Capteur selon les revendications 1 ou 2, **caractérisé en ce que** le système d'équilibrage du couplage comporte pour au moins un bobinage secondaire **(8, 9),** au moins un décalage **(d)** entre la ligne moyenne ou le rayon moyen de la piste aller et la ligne moyenne ou le rayon moyen de la piste retour dudit bobinage secondaire, selon une direction perpendiculaire à la trajectoire et selon un sens assurant une décroissance de la forme du bobinage secondaire situé au niveau des segments d'extrémité **(7b)** du bobinage primaire **(7).**

4. - Capteur selon la revendication précédente, **caractérisé en ce que** le décalage entre la ligne moyenne ou rayon moyen de la piste aller et la ligne moyenne ou rayon moyen de la piste retour dudit bobinage secondaire **(8, 9)** est symétrique par rapport à la ligne moyenne ou rayon des pistes de l'autre bobinage.

**5.** - Capteur selon les revendications 1 ou 2, **caractérisé en ce que** le système de d'équilibrage du couplage est réalisé par une modulation de la forme des bobinages secondaires **(8, 9)** pour assurer une décroissance de la forme des bobinages au niveau des segments d'extrémité **(7b)** du bobinage primaire **(7).**

**6.** - Capteur selon la revendication précédente, **caractérisé en ce que** pour une cible à trajectoire rotative, les formes de la piste aller **(8a)** et de la piste retour **(8r)** du bobinage secondaire sinus **(8)** sont décrites par la formulation suivante :

- 

$$\text{Yaller}(\theta) = \text{Ymoy\_aller} + E(\theta) * (A1*\sin(a*\theta+\varphi1) + (A2*\sin(2*a*\theta+\varphi2) + (A3*\sin(3*a*\theta+\varphi3) \ldots + An*\sin(n*a*\theta+\varphi n)) ;$$

- 

$$\text{Yretour}(\theta) = \text{Ymoy\_retour} + E(\theta) * (-A1*\sin(a*\theta+\varphi1) - (A2*\sin(2*a*\theta+\varphi2) - (A3*\sin(3*a*\theta+\varphi3) \ldots - An*\sin(n*a*\theta+\varphi n)) ;$$

et pour le bobinage secondaire cosinus **(9)** :
:

- 

$$\text{Yaller}(\theta) = \text{Ymoy\_aller} + E(\theta) * (A1*\cos(a*\theta+\varphi1) + (A2*\cos(2*a*\theta+\varphi2) + (A3*\cos(3*a*\theta+\varphi3) \ldots + An*\cos(n*a*\theta+\varphi n)) ;$$

- 

$$\text{Yretour}(\theta) = \text{Ymoy\_retour} + E(\theta) * (-A1*\cos(a*\theta+\varphi1) - (A2*\cos(2*a*\theta+\varphi2) - (A3*\cos(3*a*\theta+\varphi3) \ldots - An*\cos(n*a*\theta+\varphi n)) ;$$

avec $E(\theta)$ une fonction enveloppe.

**7.** - Capteur selon la revendication 5, **caractérisé en ce que** pour une cible à déplacement linéaire, les formes de la piste aller et de la piste retour du bobinage secondaire sinus **(8)** sont décrites par la formulation suivante :

- 

$$\text{yaller}(x) = \text{Ymoy\_aller} + E(x) * (A1*\sin(a*x+\varphi1) + (A2*\sin(2*a*x+\varphi2) + (A3*\sin(3*a*x+\varphi3) \ldots + An*\sin(n*a*x+\varphi n)) ;$$

- 

$$\text{yretour}(x) = \text{Ymoy\_retour} + E(x) * (-A1*\sin(a*x+\varphi1) - (A2*\sin(2*a*x+\varphi2) - (A3*\sin(3*a*x+\varphi3) \ldots - An*\sin(n*a*x+\varphi n)) ;$$

et pour le bobinage secondaire cosinus **(9)** :

-

$$yaller(x) = Ymoy\_aller + E(x) * (A1*cos(a*x+\varphi1) + (A2*cos(2*a*x+\varphi2) + (A3*cos(3*a*x+\varphi3) ... + An*cos(n*a*x+\varphi n)) ;$$

.

$$yretour(x) = Ymoy\_retour + E(x) * (-A1*cos(a*x+\varphi1) - (A2*cos(2*a*x+\varphi2) - (A3*cos(3*a*x+\varphi3) ... - An*cos(n*a*x+\varphi n)) ;$$

avec E(x) une fonction enveloppe.

8. - Capteur selon les revendications 6 ou 7, **caractérisé en ce que** la fonction enveloppe (**E(θ), E(x)**) présente une valeur maximum au niveau du centre du bobinage primaire **(7).**

**Patentansprüche**

1. Induktiver Positionssensor zum Bestimmen der Position eines beweglichen Teils entlang eines linearen oder Drehwegs (F), umfassend:

   - ein Ziel (3), das entlang des Wegs beweglich ist und für das Ändern eines elektromagnetischen Feldes geeignet ist,
   - eine feste Leiterplatte (5), die sich in Bezug auf das Ziel entlang eines Abschnitts erstreckt, der in Bezug auf den Weg begrenzt ist, und eine Primärwicklung (7) umfasst, die zwei Sekundärwicklungen (8, 9) umgibt, die im Wesentlichen identische Längen (L) aufweisen und Formen von Sinus- und Cosinus-Funktionen besitzen, wobei jede Sekundärwicklung (8, 9) mindestens eine Hinspur (8a, 9a) und mindestens eine Rückspur (8r, 9r) umfasst,
   - einen Stromgenerator (11) für die Primärwicklung oder die Sekundärwicklungen, um zwischen der Primärwicklung (7) und den Sekundärwicklungen (8, 9) eine induktive Kopplung zu erzeugen, die durch die Position des Ziels moduliert wird,
   - einen Detektor (13) für die lineare oder Winkelposition des Ziels ausgehend von den induzierten Signalen, die von den Sekundärwicklungen oder von der Primärwicklung stammen,
   - und ein Ausgleichssystem für die Kopplung zwischen der Primärwicklung (7) und den Sekundärwicklungen (8, 9), für welches die Amplitude der Sekundärwicklungen, die sich im Bereich der Endsegmente (7b) der Primärwicklung (7) befinden, in Bezug auf die Amplitude der Sekundärwicklungen, die sich zwischen den Sekundärwicklungen erstrecken, die sich im Bereich der Endsegmente befinden, abnimmt, um den durch die Nähe zwischen den Sekundärwicklungen (8, 9) und den Endsegmenten (7b) der Primärwicklung (7) induzierten Messungs-Offset zu kompensieren.

2. Sensor nach Anspruch 1, **dadurch gekennzeichnet, dass** die Länge der Primärwicklung (7) größer als die Länge (L) der Sekundärwicklungen (8, 9) ist, derart dass jedes Endsegment (7b) der Primärwicklung sich in Bezug auf die benachbarten Enden der Sekundärwicklungen (8, 9) in einem Abstand von kleiner als 10 Millimeter oder ¼ der Periode der Sekundärwicklungen (8, 9) befindet.

3. Sensor nach Anspruch 1 oder 2, **dadurch gekennzeichnet, dass** das Ausgleichssystem für die Kopplung für mindestens eine Sekundärwicklung (8, 9) mindestens einen Versatz (d) zwischen der Mittellinie oder dem mittleren Radius der Hinspur und der Mittellinie oder dem mittleren Radius der Rückspur der Sekundärwicklung entlang einer Richtung senkrecht zu dem Weg und entlang eines Sinnes umfasst, der eine Verminderung der Form der Sekundärwicklung, die sich im Bereich der Endsegmente (7b) der Primärwicklung (7) befindet, gewährleistet.

4. Sensor nach dem vorhergehenden Anspruch, **dadurch gekennzeichnet, dass** der Versatz zwischen der Mittellinie oder dem mittleren Radius der Hinspur und der Mittellinie oder dem mittleren Radius der Rückspur der Sekundärwicklung (8, 9) symmetrisch in Bezug auf die Mittellinie oder den Radius der Spuren der anderen Wicklung ist.

5. Sensor nach Anspruch 1 oder 2, **dadurch gekennzeichnet, dass** das Ausgleichssystem für die Kopplung durch eine Modulation der Form der Sekundärwicklungen (8, 9) ausgeführt wird, um eine Verminderung der Form der Wicklungen im Bereich der Endsegmente (7b) der Primärwicklung (7) zu gewährleisten.

6. Sensor nach dem vorhergehenden Anspruch, **dadurch gekennzeichnet, dass** für ein Ziel mit Drehweg die Formen der Hinspur (8a) und der Rückspur (8r) der Sinus-Sekundärwicklung (8) durch die folgende Formulierung beschrieben sind:

- 

$$Yaller(\theta) = Ymoy\_aller + E(\theta) * (A1*sin(a*\theta+\varphi1) + (A2*sin(2*a*\theta+\varphi2) + (A3*sin(3*a*\theta+\varphi3) ... + An*sin(n*a*\theta+\varphi n)),$$

- 

$$Yretour(\theta) = Ymoy\_retour + E(\theta) * (-A1*sin(a*\theta+\varphi1) - (A2*sin(2*a*\theta+\varphi2) - (A3*sin(3*a*\theta+\varphi3) ... - An*sin(n*a*\theta+\varphi n)),$$

und für die Cosinus-Sekundärwicklung (9):

- 

$$Yaller(\theta) = Ymoy\_aller + E(\theta) * (A1*cos(a*\theta+\varphi1) + (A2*cos(2*a*\theta+\varphi2) + (A3*cos(3*a*\theta+\varphi3) ... + An*cos(n*a*\theta+\varphi n)),$$

- 

$$Yretour(\theta) = Ymoy\_retour + E(\theta) * (-A1*cos(a*\theta+\varphi1) - (A2*cos(2*a*\theta+\varphi2) - (A3*cos(3*a*\theta+\varphi3) ... - An*cos(n*a*\theta+\varphi n)),$$

wobei $E(\theta)$ eine Hüllfunktion ist.

7. Sensor nach Anspruch 5, **dadurch gekennzeichnet, dass** für ein Ziel mit linearer Verlagerung die Formen der Hinspur und der Rückspur der Sinus-Sekundärwicklung (8) durch die folgende Formulierung beschrieben sind:

- 

$$yaller(x) = Ymoy\_aller + E(x) * (A1*sin(a*x+\varphi1) + (A2*sin(2*a*x+\varphi2) + (A3*sin(3*a*x+\varphi3) ... + An*sin(n*a*x+\varphi n)),$$

- 

$$yretour(x) = Ymoy\_retour + E(x) * (-A1*sin(a*x+\varphi1) - (A2*sin(2*a*x+\varphi2) - (A3*sin(3*a*x+\varphi3) ... - An*sin(n*a*x+\varphi n)),$$

und für die Cosinus-Sekundärwicklung (9):

- 

$$yaller(x) = Ymoy\_aller + E(x) * (A1*cos(a*x+\varphi1) + (A2*cos(2*a*x+\varphi2) + (A3*cos(3*a*x+\varphi3) ... + An*cos(n*a*x+\varphi n)),$$

·

yretour(x) = Ymoy_retour + E(x) * (-A1*cos(a*x+φ1) - (A2*cos(2*a*x+φ2) - (A3*cos(3*a*x+φ3) ... - An*cos(n*a*x+φn)),

wobei E(θ) eine Hüllfunktion ist.

8. Sensor nach Anspruch 6 oder 7, **dadurch gekennzeichnet, dass** die Hüllfunktion (E(θ), E(x)) einen Höchstwert im Bereich der Mitte der Primärwicklung (7) aufweist.

**Claims**

1. An inductive position sensor for determining the position of a moving body along a linear or rotary path (F), including:

    - a target **(3)** moving along the path adapted to modify an electromagnetic field;
    - a fixed circuit board **(5)** extending in relation to the target along a limited portion with respect to the path and including a primary coil **(7)** surrounding two secondary coils **(8, 9)** having substantially identical lengths **(L)** and having shapes of sine and cosine functions, each secondary coil **(8, 9)** including at least one outward track **(8a, 9a)** and at least one return track **(8r, 9r)**;
    - a current generator **(11)** for the primary coil or the secondary coils to create between the primary coil **(7)** and the secondary coils **(8, 9)** an inductive coupling modulated by the position of the target;
    - a detector **(13)** of the linear or angular position of the target from the induced signals derived from the secondary coils or from the primary coil;
    - and a system for balancing the coupling between the primary coil **(7)** and the secondary coils **(8, 9)** for which the amplitude of the secondary coils located at the end segments (7b) of the primary coil (7) is decreasing with respect to the amplitude of the secondary coils extending between the said secondary coils located at the end segments to compensate for the measurement offset induced by the proximity between the secondary coils **(8, 9)** and the end segments **(7b)** of the primary coil **(7)**.

2. The sensor according to claim 1, **characterized in that** the length of the primary coil **(7)** is greater than the length **(L)** of the secondary coils **(8, 9)** so that each end segment **(7b)** of the primary coil is located with respect to the neighboring ends of the secondary coils **(8, 9),** at a distance of less than 10 millimeters or 1/4 of the period of the secondary coils **(8, 9).**

3. The sensor according to claims 1 or 2, **characterized in that** the coupling balancing system includes for at least one secondary coil **(8, 9),** at least one shift **(d)** between the mean line or the mean radius of the outward track and the mean line or the mean radius of the return track of said secondary coil, along a direction perpendicular to the path and along a way ensuring a decrease in the shape of the secondary coil located at the end segments **(7b)** of the primary coil **(7).**

4. The sensor according to the preceding claim, **characterized in that** the shift between the mean line or mean radius of the outward track and the mean line or mean radius of the return track of said secondary coil **(8, 9)** is symmetrical with respect to the mean line or radius of the tracks of the other coil.

5. The sensor according to claims 1 or 2, **characterized in that** the coupling balancing system is produced by a modulation of the shape of the secondary coils **(8, 9)** to ensure a decrease in the shape of the coils at the end segments **(7b)** of the primary coil **(7).**

6. The sensor according to the preceding claim, **characterized in that** for a rotary path target, the shapes of the outward track **(8a)** and of the return track **(8r)** of the sine secondary coil **(8)** are described by the following formulation:

    ·

    Yaller(θ) = Ymoy_aller + E(θ) * (A1*sin(a*θ+φ1) + (A2*sin(2*a*θ+φ2) + (A3*sin(3*a*θ+φ3) ... + An*sin(n*a*θ+φn)) ;

- Yretour(θ) = Ymoy_retour + E(θ) * (-A1*sin(a*θ+φ1) - (A2*sin(2*a*θ+φ2) - (A3*sin(3*a*θ+φ3) ... - An*sin(n*a*θ+φn)) ;

and for the cosine secondary coil **(9)** :

- Yaller(θ) = Ymoy_aller + E(θ) * (A1*cos(a*θ+φ1) + (A2*cos(2*a*θ+φ2) + (A3*cos(3*a*θ+φ3) ... + An*cos(n*a*θ+φn)) ;

- Yretour(θ) = Ymoy_retour + E(θ) * (-A1*cos(a*θ+φ1) - (A2*cos(2*a*θ+φ2) - (A3*cos(3*a*θ+φ3) ... - An*cos(n*a*θ+φn)) ;

with E(θ) an wrapper function.

7. The sensor according to claim 5, **characterized in that** for a linear displacement target, the shapes of the outward track and of the return track of the sine secondary coil **(8)** are described by the following formulation:

- yaller(x) = Ymoy_aller + E(x) * (A1*sin(a*x+φ1) + (A2*sin(2*a*x+φ2) + (A3*sin(3*a*x+φ3) ... + An*sin(n*a*x+φn));

- yretour(x) = Ymoy_retour + E(x) * (-A1*sin(a*x+φ1) - (A2*sin(2*a*x+φ2) - (A3*sin(3*a*x+φ3) ... - An*sin(n*a*x+φn)) ;

and for the cosine secondary coil **(9)**:

- yaller(x) = Ymoy_aller + E(x) * (A1*cos(a*x+φ1) + (A2*cos(2*a*x+φ2) + (A3*cos(3*a*x+φ3) ... + An*cos(n*a*x+φn)) ;

- yretour(x) = Ymoy_retour + E(x) * (-A1*cos(a*x+φ1) - (A2*cos(2*a*x+φ2) - (A3*cos(3*a*x+φ3) ... - An*cos(n*a*x+φn)) ;

with E(x) a wrapper function.

**8.** The sensor according to claims 6 or 7, **characterized in that** the wrapper function ($E(\theta), E(x)$) has a maximum value at the center of the primary coil **(7).**

FIG.1

E(x)

XStart                    XEnd

FIG.3

FIG.4

FIG.5

**EP 3 850 309 B1**

## RÉFÉRENCES CITÉES DANS LA DESCRIPTION

**Documents brevets cités dans la description**

- US 6483295 B
- FR 3023611
- GB 2167563 A
- US 5886519 A